# EUROPÄISCHE PATENTSCHRIFT

(11) **EP 1 910 129 B1**
(45) Veröffentlichungstag und Bekanntmachung des Hinweises auf die Patenterteilung: **15.08.2012**
(21) Anmeldenummer: 06763434.5
(22) Anmeldetag: 01.06.2006
(51) Int. Cl.: B60Q 1/08

(54) **BILDAUFNAHMESYSTEM**
IMAGE RECORDING SYSTEM
SYSTEME DE PRISE D'IMAGES

(30) Priorität: 20.07.2005 DE 102005033863
(43) Veröffentlichungstag der Anmeldung: 16.04.2008
(73) Patentinhaber: ROBERT BOSCH GMBH, 70442 Stuttgart (DE)
(72) Erfinder: HAUG, Karsten, 70372 Stuttgart (DE)
(86) Internationale Anmeldenummer: PCT/EP2006/062806
(87) Internationale Veröffentlichungsnummer: WO 2007/009836

(56) Entgegenhaltungen:
- EP-A- 1 376 154
- US-A1- 2005 094 410
- US-B1- 6 576 884

## Beschreibung

### Stand der Technik

Die Erfindung betrifft ein Bildaufnahmesystem nach dem Oberbegriff des Anspruchs 1. Ein Bildaufnahmesystem der in Rede stehenden Art wird vorzugsweise in Kraftfahrzeugen eingesetzt, um Bilder des Fahrzeugumfelds zu gewinnen und, in Verbindung mit Assistenzsystemen, dem Fahrer die Führung des Fahrzeugs zu erleichtern. Insbesondere erfasst ein derartiges Bildaufnahmesystem auch Fahrzeuge, die sich auf der gleichen Fahrspur oder benachbarten Fahrspuren vor dem eigenen Fahrzeug fortbewegen. Ein derartiges Bildaufnahmesystem umfasst wenigstens einen Bildsensor und ein diesem Bildsensor zugeordnetes optisches System, das ein Aufnahmefeld des Fahrzeugumfelds auf den Bildsensor abbildet. Eine wichtige Aufgabe solcher Assistenzsysteme ist die präzise Messung des Abstands, da nur mit Kenntnis genauer Abstandswerte optische Fahrspur- und Abstandsüberwachungssysteme zuverlässig genug funktionieren. Weiterhin werden solche Bildaufnahmesysteme in zunehmendem Umfang für die Funktion "Night Vision" eingesetzt, bei der die von Infrarot-Femscheinwerfern ausgeleuchtete Szene über eine auch im Infrarotbereich empfindliche Kamera aufgenommen und dem Fahrer auf einem Display dargestellt wird, um eine größere Sichtweite zu ermöglichen. Die bei derartigen Bildaufnahmesystemen verwendeten Bildsensoren sind üblicherweise CCD- oder CMOS-Kameras. Da diese Kameras nicht dauernd belichten, also während der kompletten Framephase, sondern nur in bestimmten Zeitintervallen (z.B. Shutter-Time bei CCD-Kameras), besteht das Risiko, dass von dem Bildaufnahmesystem erfasste gepulste Lichtquellen verfälscht dargestellt werden. Verfälscht dargestellt bedeutet in diesem Zusammenhang, dass die Lichtquellen mit zu geringer Intensität, mit zu hoher Intensität oder, im schlimmsten Fall, von dem Bildaufnahmesystem gar nicht erfasst und wiedergegeben werden. Bei den gepulsten Lichtquellen kann es sich beispielsweise um in LED-Technologie ausgeführte Bremsoder Heckleuchten vorausfahrender Fahrzeuge oder um entgegenkommende Fahrzeuge mit gepulster LED-Frontbeleuchtung handeln. Die verfälschte Darstellung entsteht dadurch, dass die Einschaltphasen der gepulsten Lichtquellen nicht mit den Belichtungsphasen der Kamera übereinstimmen. Die mangelhafte Erfassung und Darstellung der gepulsten Lichtquellen kann jedoch gefährliche Situationen heraufbeschwören. Eine Gefährdung entsteht beispielsweise dadurch, dass der Fahrer des eigenen Fahrzeugs bei einem Blick auf sein Night-Vision-Display nicht mehr erkennt, dass das vorausfahrende Fahrzeug bremst. Hier droht ein Auffahrunfall. Bei Nachtfahrt sind vorausfahrende oder entgegenkommende Fahrzeuge auf dem Display schlechter erkennbar, da die gepulsten Lichtquellen nicht mehr deutlich dargestellt werden.

Aus der gattungsbildenden EP 1 367 154 A1 ist ein Nachtsichtsystem für ein Fahrzeug bekannt, umfassend eine gepulste Lichtquelle für die Beleuchtung der Umgebung des Fahrzeugs, wobei die Lichtquelle mit einer vorgebbaren Pulssteuerung arbeitet, weiter umfassend einen Lichtempfänger, der mindestens ein Signal als Reaktion auf von ihm empfangenes Licht erzeugt, sowie eine Steuereinrichtung, der das mindestens eine Signal des Lichtempfängers zuführbar ist, und welche die Pulssteuerung der Lichtquelle in Abhängigkeit von dem mindestens einen Signal des Lichtempfängers verändert. Dadurch soll verhindert werden, dass das Nachtsichtsystem des Fahrzeugs durch die Lichtquelle eines mit einem vergleichbaren Nachtsichtsystem ausgerüsteten aber in Gegenrichtung fahrenden Fahrzeugs geblendet wird.

Aus US 2005/0094410 A1 ist ein im Wesentlichen der EP 1 367 154 A1 entsprechendes Nachtsichtsystem für ein Fahrzeug bekannt, umfassend eine primäre gepulste Lichtquelle im nahen Infrarotbereich (NIR) für die Beleuchtung der Umgebung des Fahrzeugs und eine sekundäre Triggerlichtquelle, die mit einer vorgebbaren Pulssteuerung auf einer zweiten Lichtwellenlänge arbeitet. Das Nachtsichtsystem umfasst weiter einen Lichtempfänger, der Licht der zweiten Wellenlänge detektiert. Die Pulse der Triggerlichtquelle dienen der Erfassung der Pulssteuerung der primären NIR (near infrared) Lichtquelle eines jeweiligen Fahrzeugs. Nach Erfassung der Lichtsignale der Triggerlichtquelle eines Fremdfahrzeugs beeinflusst ein Steuergerät des Nachtsichtsystems des Egofahrzeugs die Pulsphase der primären NIR Lichtquelle des Egofahrzeugs derart, dass diese außer Phase mit der Lichtquelle des herannahenden Fremdfahrzeugs ist. Dies ist dadurch möglich, dass die Pulssteuerung der NIR Lichtquelle des Fremdfahrzeugs durch Erfassung der Lichtsignale seiner Triggerlichtquelle bekannt ist. Auf diese Weise kann jedes Fahrzeug die primären Lichtquellen derart steuern, dass sie außer Phase sind und sich somit nicht nachteilig beeinflussen.

Aus US 6,576,884 B1 sind ein Verfahren und ein System für die Steuerung der Empfangsphase (gating) eines Lichtempfängers bekannt. Das System umfasst einen Sensor, der Licht erfasst und ein dem erfassten Licht entsprechendes Signal erzeugt. Eine Steuereinrichtung empfängt das Signal, passt ein Steuersignal für den Lichtempfänger an dieses Signal an und führt dem Lichtempfänger ein entsprechend angepasstes Ausgangssignal zu.

Aus DE 100 33 103 A1 ist ein Infrarot-Sichtsystem bekannt, das mindestens eine IR-Lichtquelle und mindestens ein IR-Sichtgerät zur Darstellung eines von der IR-Lichtquelle ausleuchtbaren Reliefs aufweist, wobei zusätzlich ein IR-Detektor zur Erkennung eines IR-Fremdpulses vorhanden ist. Die Druckschrift geht davon aus, dass die genannten Sichtsysteme in Kraftfahrzeugen eingesetzt werden und auch sich begegnende Kraftfahrzeuge damit ausgerüstet sind. Der zusätzlich vorgesehene IR-Detektor detektiert störende IR-Lichtimpulse eines fremden Fahrzeugs, die das eigene Sichtsystem blenden könnten. Weiterhin steuert der IR-Detektor die Eigen-Pulsfrequenz derart, dass sie der Fremd-Pulsfrequenz angeglichen wird. Die Angleichung erfolgt beispielsweise derart, dass bei Abwesenheit eines IR-Fremdstrahlers die gesamte Zeit das Relief ausgeleuchtet wird und bei Vorhandensein eines oder mehrerer Fremdstrahler die Strahlzeit des eigenen IR-Systems so eingestellt wird, dass eine maximale Beleuchtungszeit verbleibt.

Auch aus US 2003/0043280 A1 ist ein Bilderfassungssystem mit einer Infrarotkamera und einem Infrarotstrahler bekannt, der den Erfassungsbereich der Infrarotkamera beleuchtet. Zusätzlich umfasst das Bilderfassungsystem einen Sensor, der bei Erfassung einer fremden gepulsten Lichtquelle in dem Erfassungsbereich des Bildaufnahmesystems die Infrarotkamera derart steuert, dass die fremde gepulste Lichtquelle von der Kamera möglichst nicht erfasst wird.

### Vorteile der Erfindung

Demgegenüber ermöglicht die Erfindung eine wesentlich verbesserte Erfassung gepulster Lichtquellen, um auf diese Weise die Erkennung von gepulsten Lichtquellen zu verbessern und dadurch die Verkehrssicherheit zu erhöhen. Zu diesem Zweck umfasst das Bildaufnahmesystem vorteilhaft einen Strahlungssensor mit einer im Wesentlichen gleichen Intensitätsdynamik, mit einem im Wesentlichen gleichen Öffnungswinkel und einer im Wesentlichen gleichen Blickrichtung wie die Kamera für die Erfassung gepulster Lichtquellen. Weiterhin umfasst das Bildaufnahmesystem eine Steuereinrichtung, die aus den Signalen der Kamera und des Strahlungssensors die Diskrepanz ermittelt. In Abhängigkeit von der festgestellten Diskrepanz wird in einer einfachen Ausführungsvariante ein Warnsignal erzeugt, das den Fahrer auf Mängel der Displaydarstellung hinweist. Zusätzlich kann das Display zeitweise dunkel gesteuert oder auch abgeschaltet werden. In komplexeren Ausführungsvarianten wird die Belichtungsphase der Kamera in Abhängigkeit von der Diskrepanz mit der Einschaltphase der Lichtquelle synchronisiert. In einer weiteren Ausführungsvariante wird das Bildaufnahmesystem einerseits in einem linearen und andererseits in einem nicht linearen Modus betrieben. Erfasste Bilder werden verglichen. Bei Auftreten gepulster Lichtquellen werden wenigstens Teilbereiche der in dem nicht linearen Modus erfassten Bilder durch entsprechende Teilbereiche der in dem linearen Modus erfassten Bilder ersetzt.

### Zeichnung

Die Erfindung wird nachstehend anhand der in der Zeichnung dargestellten Ausführungsformen näher erläutert.

Es zeigen:
- Figur 1:: ein Blockschaltbild eines Bildaufnahmesystems;
- Figur 2:: ein Blockschaltbild für die Ermittlung der Diskrepanz;
- Figur 3:: ein erstes Diagramm mit Darstellung der Belichtungsphase einer Kamera und der Einschaltphase einer gepulsten Lichtquelle;
- Figur 4:: ein weiteres Diagramm mit Darstellung der Belichtungsphase einer Kamera und der Einschaltphase einer gepulsten Lichtquelle;
- Figur 5:: ein weiteres Diagramm mit Darstellung der Belichtungsphase einer Kamera und der Einschaltphase einer gepulsten Lichtquelle;
- Figur 6:: ein weiteres Diagramm mit Darstellung der Belichtungsphase einer Kamera und der Einschaltphase einer gepulsten Lichtquelle;
- Figur 7:: ein weiteres Diagramm mit Darstellung der Belichtungsphase einer Kamera und der Einschaltphase einer gepulsten Lichtquelle;
- Figur 8:: die Darstellung eines Reglers, der in Abhängigkeit von der eingangsseitig zugeführten Diskrepanz die Belichtungsphase verändert.

### Beschreibung der Ausführungsbeispiele

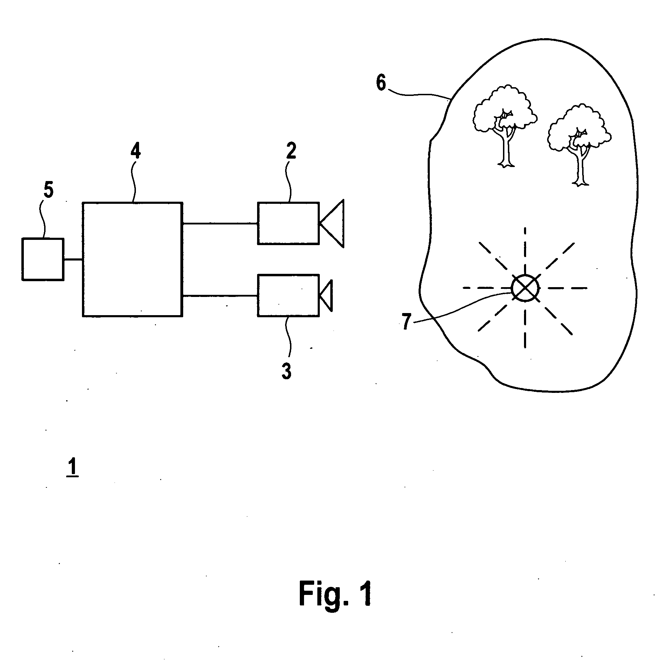

Nachfolgend werden Ausführungsbeispiele der Erfindung beschrieben. Ein erstes Ausführungsbeispiel wird unter Bezug auf Figur 1 erläutert, die ein Blockschaltbild eines Bildaufnahmesystems 1 und eine Bildszene 6 darstellt. Das Bildaufnahmesystem 1 umfasst eine Kamera 2, insbesondere eine CCD- oder CMOS-Kamera. Zusätzlich umfasst das Bildaufnahmesystem 1 einen Strahlungsdetektor 3, der möglichst eine mit der Kamera 2 übereinstimmende Intensitätsdynamik sowie den gleichen öffnungswinkel und die gleiche Blickrichtung wie die Kamera 2 aufweist. Bei dem Strahlungsdetektor 3 handelt es sich vorzugsweise um eine Photodiode oder einen Phototransistor. Die Kamera 2 und der Strahlungsdetektor 3 sind mit einem Steuergerät 4 verbunden. Das Steuergerät 4 ist mit einem Display 4 verbunden.
Der Strahlungsdetektor 3 ermittelt quasi kontinuierlich einen mittleren Helligkeitspegel der gesamten Bildszene 6, die von dem Bildaufnahmesystem 1 erfasst wird. Aus dem Histogramm des Kamerabildes, das für eine Belichtungsregelung gebildet wird, wird durch Rückrechnung mittels der bekannten Belichtungsparameter zu diesem Histogramm ebenfalls eine mittlere Helligkeit gebildet. Sofern diese beiden Helligkeitspegel signifikant voneinander abweichen, kann darauf geschlossen werden, dass sich gepulste Lichtquellen 7 in dem Erfassungsbereich des Bildaufnahmesystems 1 befinden, die von der Kamera 2 nicht vollständig erfasst werden, da ihre Belichtungsphase zumindest teilweise mit den Dunkelphasen der gepulsten Lichtquellen 7 zusammenfällt. Diese Situation wird im Folgenden als Diskrepanz bezeichnet. Bei einer einfachen Ausführungsvariante der Erfindung wird bei dem Vorliegen einer derartigen Diskrepanz eine Warnung auf dem Display 5 des Bildaufnahmesystems 1 ausgegeben. Diese Warnung kann beispielsweise den Fahrer auffordern, besonders aufmerksam auf die Straße zu schauen und die Darstellung auf dem Display 5 zumindest zeitweilig außer Acht zu lassen. Bei einer alternativen Ausführungsvariante kann, ggf. in Verbindung mit einer derartigen Warnung, das Display 5 zumindest zeitweise ausgeschaltet werden, da es die Fahrzeugumgebung, insbesondere dort vorhandene gepulste Lichtquellen 7, nicht mehr richtig darstellt.

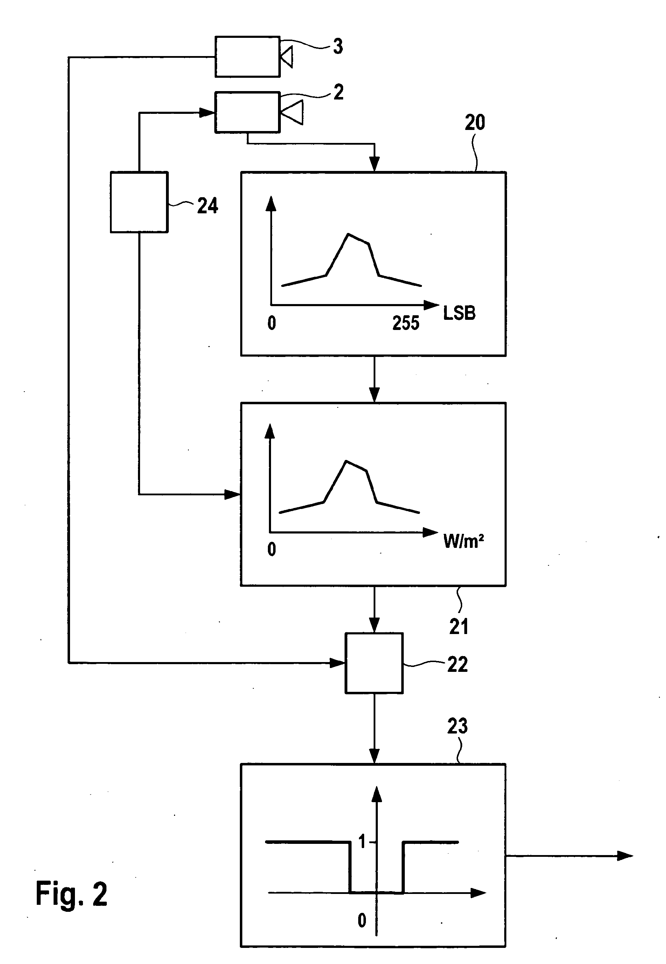

Figur 2 zeigt ein Blockschaltbild, anhand dessen die Ermittlung der Diskrepanz erläutert wird. Mit Bezugsziffer 2 ist wiederum die Kamera des Bildaufnahmesystems 1 bezeichnet. Mit Bezugsziffer 3 ist ein zusätzlicher Strahlungsdetektor bezeichnet. Die Kamera 2 ist mit einem Funktionsmodul 20 verbunden. Das Funktionsmodul 20 ist mit einem Funktionsmodul 21 verbunden. Ein Funktionsmodul 24 ist mit der Kamera 2 und mit dem Funktionsmodul 21 verbunden. Das Funktionsmodul 21 ist mit einem Funktionsmodul 22 verbunden. Der Strahlungsdetektor 3 ist mit dem Funktionsmodul 22 verbunden. Das Funktionsmodul 22 ist mit einem Funktionsmodul 23 verbunden. Bei Aufnahme einer Bildszene wird von der Kamera 2 ein Strom von Videodaten bereitgestellt. Die Wortbreite kann beispielsweise 8 Bit betragen. Die Videodaten der Kamera 2 werden dem Funktionsmodul 20 zugeführt, das aus diesen Videodaten zunächst ein Histogramm der digitalen Grauwerte ermittelt. Unter Berücksichtigung der jeweils gewählten Belichtungsparameter und Betriebskenngrößen der Kamera 2, wie beispielsweise Blendenzahl und Empfmdlichkeit des in der Kamera 2 eingesetzten Imagers (Funktionsmodul 24), wird das Histogramm der digitalen Grauwerte dann in dem Funktionsmodul 21 in ein Histogramm absoluter Helligkeitswerte umgerechnet. In einem weiteren Schritt wird dann, beispielsweise durch Integration, aus diesen Helligkeitswerten ein Mittelwert der Helligkeit bestimmt. Dieser Mittelwert wird dann in dem Funktionsmodul 22 mit einem Mittelwert der Helligkeit verglichen, der mittels des zusätzlichen Strahlungsdetektors 3 erfasst worden ist. Der Vergleich kann vorteilhaft durch eine Differenzbildung der beiden genannten Mittelwerte in dem Funktionsmodul 22 erfolgen. Dieser Vergleich liefert die gewünschte Diskrepanz. Vorteilhaft kann durch Vorgabe eines Schwellwerts noch eine binäre Form der Diskrepanz gewonnen werden. Solange der vorgebbare Schwellwert unterschritten ist, nimmt die Diskrepanz den Wert NULL an. Wird der vorgebbare Schwellwert überschritten, nimmt die Diskrepanz den Wert EINS an.

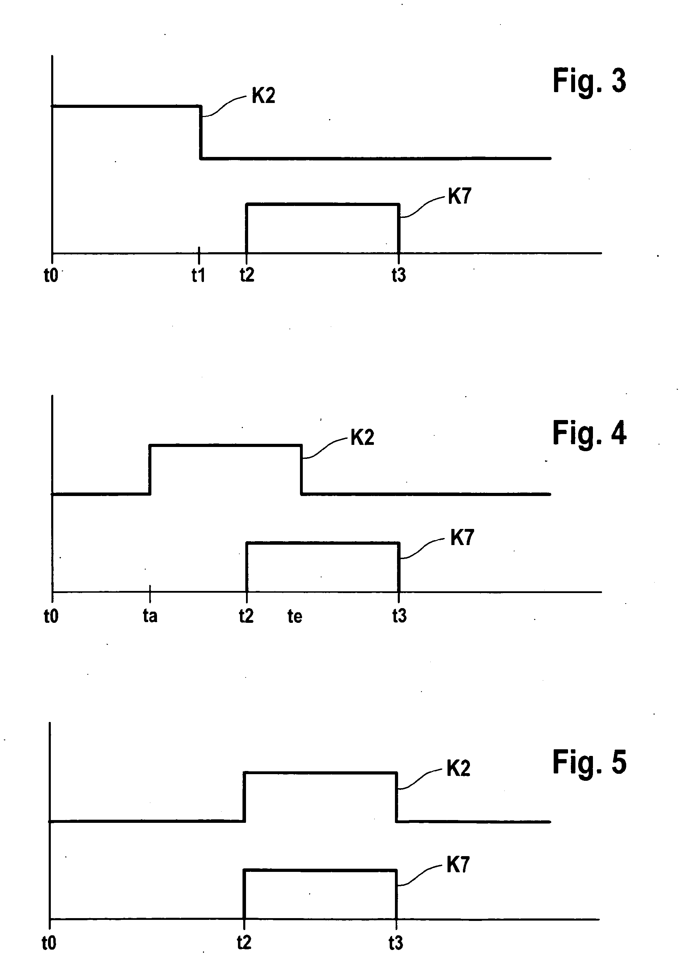

Sofern das Bildaufnahmesystem 1 eine zu einem Restart fähige Kamera 2 umfasst, kann, in einem weiteren Ausführungsbeispiel der Erfindung, versucht werden, die Belichtungsphase der Kamera 2 derart zu verschieben, dass die Belichtungsphase der Kamera 2 und die Einschaltphase der gepulsten Lichtquelle 7 phasenrichtig synchronisiert werden. Dies wird anhand von Figur 2, Figur 3 und Figur 4 erläutert, die jeweils Belichtungsphasen (Kurve K2) der Kamera 2 und Einschaltphasen (Kurve K7) der gepulsten Lichtquelle 7 darstellen. In Figur 2 beginnt die Belichtungsphase der Kamera 2 gemäß Kurve K2 zum Zeitpunkt t0 und endet zum Zeitpunkt t1. Die Einschaltphase der gepulsten Lichtquelle 7 dagegen beginnt bei t2 und endet bei t3. Da keine zeitliche Überlappung gegeben ist, bedeutet das in der Praxis, dass die Kamera 2 die gepulste Lichtquelle 7 nicht erfasst. Die sich hieraus ergebende Gefährdung der Verkehrsteilnehmer ist offensichtlich. In Figur 3 beginnt die Belichtungsphase der Kamera 2 gemäß Kurve K2 bei ta und endet bei te. Die Einschaltphase der gepulsten Lichtquelle 7 liegt wiederum zwischen t2 und t3. Auf diese Weise ergibt sich eine zeitliche Überlappung zwischen der Belichtungsphase und der Einschaltphase in dem Intervall t2 bis te. Figur 3 zeigt schließlich eine optimierte Situation, bei der Belichtungsphase der Kamera 2 und die Einschaltphase der gepulsten Lichtquelle 7 völlig übereinstimmen, da beide das Zeitintervall t2-t3 abdecken. Hierbei ist eine ideale Situation angenommen, bei der die Dauer der Belichtungsphase und die Dauer der Einschaltphase im Wesentlichen gleich lang sind. In der Praxis können aber Belichtungsphase und Einschaltdauer unterschiedlich lang sein. Es ist daher anzustreben, dass die Belichtungsphase einen möglichst großen Teil der Einschaltphase abdeckt. Eine zu einem Restart fähige Kamera läuft nicht in einem festen Takt, sondern kann, getriggert durch einen externen Impuls, zu der Aufnahme eines neuen Bildes gezwungen werden. Vorzugsweise wird die Belichtungsphase der Kamera 2 daher zunächst um eine halbe Framedauer verschoben. Dann wird erneut berechnet, ob eine Diskrepanz vorliegt. Sollte dies immer noch der Fall sein, wird die Belichtungsphase der Kamera 2 wiederum um eine halbe Framedauer nach vom verschoben. Die beschriebene Maßnahme wird so lange wiederholt, bis die Diskrepanz hinreichend klein wird. Vorzugsweise kann dafür ein Grenzwert der Diskrepanz vorgegeben werden.

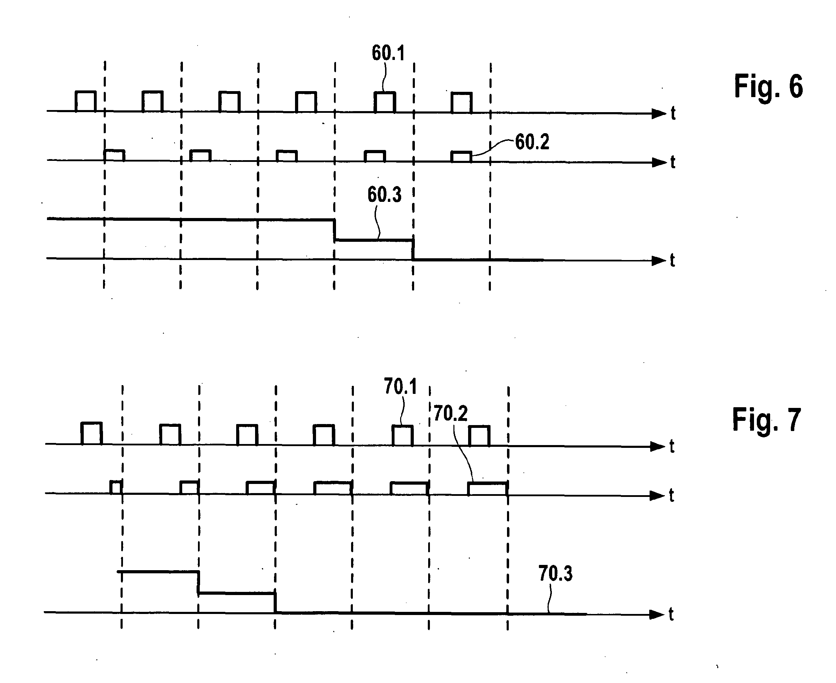

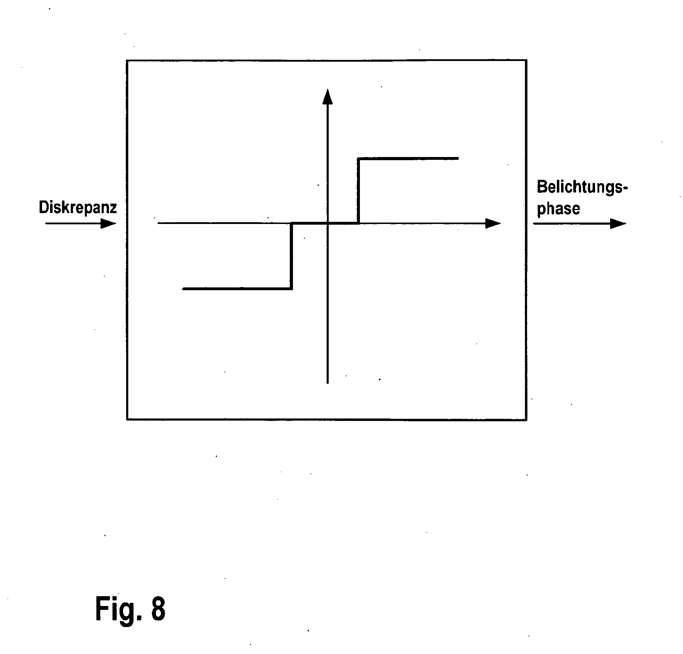

Dieser Zusammenhang wird im Folgenden nochmals unter Bezugnahme auf Figur 6 erläutert, in der mehrere aufeinander folgende Belichtungsphasen dargestellt sind. Die Belichtungsphasen sind dabei durch die senkrecht angeordneten, gestrichelt gezeichneten Strecken voneinander getrennt. Das obere, mit Bezugsziffer 60.1 bezeichnete Impulsdiagramm repräsentiert das optische Ausgangssignal eines gepulsten Strahlungssenders, beispielsweise einer LED-Lichtquelle, die mit einer konstanten Impulsfolgefrequenz gesteuert wird. Die Leuchtdauer ist jeweils konstant. Das mittlere Impulsdiagramm 60.2 repräsentiert die Belichtungsphasen der Kamera 2 und des Strahlungsempfängers 3. Figur 6 zeigt nun beispielhaft, wie eine zunächst bestehende Phasendifferenz zwischen der gepulsten LED-Lichtquelle und der zu einem Restart fähigen Kamera 2 geregelt wird. Fähig zu einem Restart bedeutet in diesem Zusammenhang, dass die Belichtungszeiten der Kamera 2 nicht in einem festen Taktraster verlaufen, sondern zeitlich veränderbar sind und beispielsweise über einen binären Eingang getriggert werden können. Derartige Kameras werden beispielsweise auch in der Fertigungsüberwachung häufig eingesetzt. Der mit Bezugsziffer 60.3 bezeichnete Kurvenverlauf stellt die Diskrepanz dar. Wie in Figur 6 erkennbar, weisen die gepulste Lichtquelle (Impulsdiagramm 60.1) und die Belichtungsphase (Impulsdiagramm 60.2) der Kamera 2 zunächst eine Phasendifferenz von ca. 180° auf, sie sind also praktisch gegenphasig. Die Diskrepanz (Kurve 60.3) ist damit deutlich positiv und führt damit bei dem in Figur 8 dargestellten Dreipunktregler zu einer positiven Phasenverschiebung. Innerhalb von vier Kamerazyklen wird die bestehende Phasendifferenz ausgeregelt. Anstelle eines Dreipunktreglers könnte auch ein PI-, PD-, PID-Regler oder eine beliebige geeignete Regelstrategie eingesetzt werden.

Bei einer anderen Ausführungsvariante der Erfindung wird eine Kamera 2 vorgesehen, die nicht zu einem beliebigen Restart fähig ist. Derartige Kameras sind relativ weit verbreitet. Bei dieser Ausführungsvariante wird die Belichtungszeit der Kamera 2 derart verändert, dass die Einschaltphasen der gepulsten Lichtquelle 7 vollständig erfasst werden. Hierzu wird zunächst auf maximale Belichtungszeit geschaltet, die der Framedauer entspricht. Zusätzlich wird die Kamera 2 von einem nicht linearen auf einen linearen Aufnahmemodus umgeschaltet. Das bedeutet, dass keine nicht belichteten Phasen durch eine nicht lineare Knickkennlinie entstehen. Gleichzeitig wird die Verstärkung verringert, um eine Überbelichtung in hellen Bereichen des Erfassungsbereichs der Kamera 2 möglichst gering zu halten. Durch diese Maßnahmen ist sichergestellt, dass gepulste Lichtquellen 7 vollständig erfasst werden. Das so gewonnene Bild wird auf absolute Helligkeit zurückgerechnet und mit dem zuvor aufgenommenen, ebenfalls zurückgerechneten aber nicht vollständig belichteten Bild verglichen. Signifikante Unterschiede zwischen den beiden Bildern ergeben sich an den Stellen, an denen sich gepulste Lichtquellen befinden. Diese Stellen werden dann im Originalbild durch die in einem linearen Aufnahmemodus ermittelten Intensitäten ersetzt, wodurch nun auch gepulste Lichtquellen in ihrer tatsächlichen Intensität erfasst und sichtbar werden.

Dieser Zusammenhang wird i Folgenden nochmals unter Bezug auf Figur 7 erläutert. Das Impulsdiagramm 70.1 stellt wiederum das optische Ausgangssignal eines gepulsten Strahlungssenders, insbesondere einer LED-Lichtquelle, dar. Das Impulsdiagramm 70.2 stellt Belichtungsphasen einer nicht zu einem Restart fähigen Kamera dar. Hierbei handelt es sich beispielsweise um eine klassische CCD- oder CMOS-Kamera, deren Belichtungsphasen immer an dem Ende eines Kamerazyklus unmittelbar vor dem Auslesezeitpunkt liegen. Das Ende der Belichtungsphase kann also nicht verschoben werden. Lediglich die Länge der Belichtungsphase kann verändert werden. Wiederum dient die Diskrepanz (Kurve 70.3) als Eingangsgröße für einen Regler, beispielsweise einen Dreipunktregler gemäß Figur 8. Wie bei dem zuvor beschriebenen Beispiel einer zu einem Restart fähigen Kamera können jedoch auch andere Reglertypen zur Anwendung kommen. Wie aus Figur 7 ersichtlich ist, überlappen sich die aktiven Steuerphasen der LED-Lichtquelle (Impulsdiagramm 70.1) und der nicht zu einem Restart fähigen Kamera (Impulsdiagramm 70.2) zunächst überhaupt nicht. Die Diskrepanz nimmt daher zunächst einen relativ großen positiven Wert an (Kurve 70.3). Dies führt in dem Regler (Figur 8) zu einer Verlängerung der Belichtungszeit bei gleichzeitiger Reduktion des Gain der Kamera. Die Absolutverstärkung der Kamera (näherungsweise Produkt aus Belichtungsdauer, Gain und einer Konstante) wird also nicht verändert. Die Bewegungsunschärfe und der Rauschpegel der Kamera nehmen dabei allerdings zu. In dem dritten der in Figur 7 dargestellten Kamerazyklen findet zum ersten Mal eine Überlappung statt, was zur Folge hat, dass die Diskrepanz (Kurve 70.3) zurückgeht. In dem vierten Kamerazyklus wurde die Diskrepanz schließlich vollständig ausgeregelt. Die LED-Lichtquelle wird nun vollständig in ihrer wahren Lichtintensität erfasst.

Für den Fall, dass das eigene Fahrzeug mit gepulsten Frontscheinwerfern ausgerüstet ist (z.B. mit LED- oder Laserscheinwerfern), die mit den Belichtungsphasen der Kamera synchronisiert sind, so sind, analog zu den Belichtungsphasen der Kamera, auch die Beleuchtungsphasen der eigenen Frontscheinwerfer zu verschieben.

## Patentansprüche

1. Bildaufnahmesystem (1) mit einer Kamera (2) für die Erfassung eines Fahrzeugumfeldes, mit einem zusätzlichen Strahlungssensor (3) für die Erfassung einer gepulsten Lichtquelle (7), sowie eine von dem Strahlungssensor (3) steuerbare Steuereinrichtung (4), **dadurch gekennzeichnet, dass** aus dem Histogramm des Kamerabildes ein mittlerer Helligkeitspegel gebildet wird, dass der zusätzliche Strahlungssensor (3) quasikontinuierlich einen mittleren Helligkeitspegel ermittelt, dass die beiden genannten Helligkeitspegel verglichen und eine Abweichung der Helligkeitspegel als Diskrepanz ermittelt wird, und dass bei Auftreten einer Diskrepanz die Belichtungsphase der Kamera (2) derart verschoben wird, dass die Belichtungsphase der Kamera (2) und die Einschaltphase der gepulsten Lichtquelle (7) phasenrichtig synchronisiert werden.

2. Bildaufnahmesystem (1) mit einer Kamera (2) für die Erfassung eines Fahrzeugumfeldes, mit einem zusätzlichen Strahlungssensor (3) für die Erfassung einer gepulsten Lichtquelle (7), sowie eine von dem Strahlungssensor (3) steuerbare Steuereinrichtung (4), **dadurch gekennzeichnet, dass** aus dem Histogramm des Kamerabildes ein mittlerer Helligkeitspegel gebildet wird, dass der zusätzliche Strahlungssensor (3) quasikontinuierlich einen mittleren Helligkeitspegel ermittelt, dass die beiden genannten Helligkeitspegel verglichen und eine Abweichung der Helligkeitspegel als Diskrepanz ermittelt wird, und dass bei Auftreten einer Diskrepanz die Bildwiedergabe des Bildaufnahmesystems (1) abgeschaltet und/oder eine Warnanzeige ausgegeben wird.

3. Bildaufnahmesystem nach einem der vorhergehenden Ansprüche, **dadurch gekennzeichnet, dass** die Kamera (2) eine CCD- oder eine CMOS-Kamera ist.

4. Bildaufnahmesystem nach einem der vorhergehenden Ansprüche, **dadurch gekennzeichnet, dass** die Kamera (2) eine zu einem Restart fähige Kamera ist.

5. Bildaufnahmesystem (1) nach einem der vorhergehenden Ansprüche,
**dadurch gekennzeichnet, dass** der Strahlungssensor (3) eine im Wesentlichen gleiche Intensitätsdynamik, einen im Wesentlichen gleichen Öffnungswinkel und eine im Wesentlichen gleiche Blickrichtung wie die Kamera (2) des Bildaufnahmesystems (1) aufweist.

6. Bildaufnahmesystem (1) nach einem der vorhergehenden Ansprüche,
**dadurch gekennzeichnet, dass** ein Regler vorgesehen ist, dem die Diskrepanz als Eingangsgröße zuführbar ist.

7. Bildaufnahmesystem (1) nach einem der vorhergehenden Ansprüche,
**dadurch gekennzeichnet, dass** die Belichtungsphase der Kamera (2) solange zeitlich verändert wird bis ein vorgebbarer Grenzwert der Diskrepanz erreicht ist.

8. Bildaufnahmesystem (1) nach einem der vorhergehenden Ansprüche,
**dadurch gekennzeichnet, dass** zwecks Synchronisation der Belichtungsphase der Kamera (2) mit der Einschaltphase der Lichtquelle (7) die Belichtungsphase der Kamera (2) zunächst um eine halbe Framedauer verschoben und dann die sich einstellende Diskrepanz erfasst wird.

9. Bildaufnahmesystem nach einem der vorhergehenden Ansprüche, **dadurch gekennzeichnet, dass** eine binäre Form der Diskrepanz dadurch gewonnen wird, dass der ermittelte Wert der Diskrepanz mit dem vorgebbaren Grenzwert verglichen wird, wobei bei Unterschreiten des Grenzwerts der Wert NULL für die Diskrepanz gesetzt wird und wobei bei Überschreiten des Grenzwerts die Diskrepanz den Wert EINS annimmt.

## Claims

1. Image recording system (1) having a camera (2) for detecting the surroundings of a vehicle, and having an additional radiation sensor (3) for detecting a pulsed light source (7), and a control device (4) which can be controlled by the radiation sensor (3), **characterized in that** a mean brightness level is formed from the histogram of the camera image, **in that** the additional radiation sensor (3) determines a mean brightness level in a quasi-continuous fashion, **in that** the two said brightness levels are compared and a deviation of the brightness levels is determined as a discrepancy, and **in that** upon the occurrence of a discrepancy the exposure phase of the camera (2) is shifted in such a way that the exposure phase of the camera (2) and the switch-on phase of the pulsed light source (7) are synchronized with the correct phase.

2. Image recording system (1) having a camera (2) for detecting the surroundings of a vehicle, and having an additional radiation sensor (3) for detecting a pulsed light source (7), and a control device (4) which can be controlled by the radiation sensor (3), **characterized in that** a mean brightness level is formed from the histogram of the camera image, **in that** the additional radiation sensor (3) determines a mean brightness level in a quasi-continuous fashion, **in that** the two said brightness levels are compared and a deviation of the brightness levels is determined as a discrepancy, and **in that** upon the occurrence of a discrepancy the image reproduction of the image recording system (1) is switched off and/or a warning display is output.

3. Image recording system according to one of the preceding claims, **characterized in that** the camera (2) is a CCD or a CMOS camera.

4. Image recording system according to one of the preceding claims, **characterized in that** the camera (2) is a camera capable of restarting.

5. Image recording system (1) according to one of the preceding claims, **characterized in that** the radiation sensor (3) has substantially the same intensity dynamics, substantially the same aperture angle and substantially the same viewing direction as the camera (2) of the image recording system (1).

6. Image recording system (1) according to one of the preceding claims, **characterized in that** a controller is provided which can be fed the discrepancy as input variable.

7. Image recording system (1) according to one of the preceding claims, **characterized in that** the exposure phase of the camera (2) is temporally varied until a prescribable limit value of the discrepancy is reached.

8. Image recording system (1) according to one of the preceding claims, **characterized in that** for the purpose of synchronization of the exposure phase of the camera (2) with the switch-on phase of the light source (7), the exposure phase of the camera (2) is firstly shifted by half a frame period, and the resulting discrepancy is then detected.

9. Image recording system according to one of the preceding claims, **characterized in that** a binary form of the discrepancy is obtained by virtue of the fact that the determined value of the discrepancy is compared with the prescribable limit value, the value ZERO being set for the discrepancy in the event of undershooting of the limit value, and the discrepancy assuming the value ONE upon overshooting of the limit value.

## Revendications

1. Système (1) d'enregistrement d'image doté d'une caméra (2) qui saisit l'environnement d'un véhicule, d'une sonde supplémentaire de rayonnement (3) qui détecte une source (7) de lumière pulsée ainsi que d'un dispositif de commande (4) apte à être commandé par la sonde de rayonnement (3),
**caractérisé en ce que**
un niveau moyen de luminosité est formé à partir de l'histogramme de l'image de la caméra,
**en ce que** la sonde supplémentaire de rayonnement (3) détermine de manière quasi continue un niveau moyen de luminosité,
**en ce que** lesdits deux niveaux de luminosité sont comparés et qu'un écart entre les niveaux de luminosité est déterminé comme constituant une anomalie et
**en ce qu'**au cas où une anomalie survient, la phase d'éclairage de la caméra (2) est décalée de telle sorte que la phase d'éclairage de la caméra (2) et la phase de branchement de la source (7) de lumière pulsée soient synchronisées en accord de phases.

2. Système (1) d'enregistrement d'image doté d'une caméra (2) qui saisit l'environnement d'un véhicule, d'une sonde supplémentaire de rayonnement (3) qui détecte une source (7) de lumière pulsée ainsi que d'un dispositif de commande (4) apte à être commandé par la sonde de rayonnement (3),
**caractérisé en ce que**
un niveau moyen de luminosité est formé à partir de l'histogramme de l'image de la caméra,
**en ce que** la sonde supplémentaire de rayonnement (3) détermine de manière quasi continue un niveau moyen de luminosité,
**en ce que** lesdits deux niveaux de luminosité sont comparés et qu'un écart entre les niveaux de luminosité est déterminé comme constituant une anomalie et
**en ce qu'**au cas où une anomalie survient, la reproduction de l'image par le système (1) d'enregistrement d'image est désactivée et/ou un affichage d'avertissement est délivré.

3. Système d'enregistrement d'image selon l'une des revendications précédentes, **caractérisé en ce que** la caméra (2) est une caméra CCD ou une caméra CMOS.

4. Système d'enregistrement d'image selon l'une des revendications précédentes, **caractérisé en ce que** la caméra (2) est une caméra apte à redémarrer.

5. Système (1) d'enregistrement d'image selon l'une des revendications précédentes, **caractérisé en ce que** la sonde de rayonnement (3) présente une dynamique d'intensité, un angle d'ouverture et une direction d'observation essentiellement identiques à ceux de la caméra (2) du système (1) d'enregistrement d'image.

6. Système (1) d'enregistrement d'image selon l'une des revendications précédentes, **caractérisé en ce qu'**il présente un régulateur auquel l'anomalie peut être apportée en tant que grandeur d'entrée.

7. Système (1) d'enregistrement d'image selon l'une des revendications précédentes, **caractérisé en ce que** la phase d'éclairage de la caméra (2) est modifiée temporellement jusqu'à atteindre une valeur limite prédéterminée de l'anomalie.

8. Système (1) d'enregistrement d'image selon l'une des revendications précédentes, **caractérisé en ce que** pour synchroniser la phase d'éclairage de la caméra (2) sur la phase de branchement de la source (7) de lumière, la phase d'éclairage de la caméra (2) est d'abord déplacée de la moitié de la durée d'une trame, l'anomalie qui s'établit étant ensuite saisie.

9. Système d'enregistrement d'image selon l'une des revendications précédentes, **caractérisé en ce qu'**une forme binaire de l'anomalie est obtenue en comparant la valeur déterminée de l'anomalie à la valeur limite prédéterminée, ZERO étant imposé pour l'anomalie lorsque la valeur limite n'est pas atteinte et l'anomalie prenant la valeur UN lorsque la valeur limite est dépassée.
